# EUROPEAN PATENT SPECIFICATION

(11) **EP 3 408 359 B1**
(45) Date of publication and mention of the grant of the patent: **01.01.2020**
(21) Application number: 17704318.9
(22) Date of filing: 26.01.2017
(51) Int. Cl.: C10L 3/08, C10L 5/40, C10B 7/10, C10B 53/07

(54) **PRODUCTION METHOD OF GASEOUS FUEL**
HERSTELLUNGSVERFAHREN VON GASFÖRMIGEM BRENNSTOFF
PROCÉDÉ DE PRODUCTION DE COMBUSTIBLE GAZEUX

(30) Priority: 28.01.2016 NL 2016172; 22.07.2016 NL 2017212
(43) Date of publication of application: 05.12.2018
(73) Proprietor: Next Renewable Group B.V., 3016 BM Rotterdam (NL)
(72) Inventor: MORANG, Jan Antoon Cornelis, 3111 CJ Schiedam (NL); VISSER, Leo, 3016 CK Rotterdam (NL)
(74) Representative: EP&C
(86) International application number: PCT/NL2017/050049
(87) International publication number: WO 2017/131517

(56) References cited:
- DE-C1- 3 819 699
- US-A1- 2006 280 669
- US-A1- 2011 041 395
- US-A1- 2012 043 194
- US-A1- 2015 218 457
- US-A1- 2015 275 114
- US-B2- 7 188 571
- European Union: "DIRECTIVE 2008/98/EC OF THE EUROPEAN PARLIAMENT AND OF THE COUNCIL of 19 November 2008 on waste and repealing certain Directives", Official Journal of the European Union, 22 November 2008 (2008-11-22), XP55355101, Retrieved from the Internet: URL:http://eur-lex.europa.eu/legal-content /EN/TXT/PDF/?uri=CELEX:32008L0098&from=EN [retrieved on 2017-03-15]

## Description

The present invention relates to a production method of a gaseous fuel, a starting material for use in said production method comprising a free flowing particulate composition of secondary fuel, and a greenhouse.

In general, there is a need for sustainable economics. This applies to the consumption of natural resources, energy production, waste processing and the like. It is known to produce energy carriers, in particular gaseous and/or oil like fuels from biomass, but also from secondary fuels. In the production of gaseous energy carriers from secondary fuels the composition of the produced gas and its caloric value are important parameters, which in general are desired to be similar to those of natural gas. On the one hand this allows injection of the produced gas into an existing gas distribution network, on the other hand it allows to burn the fuel directly in existing equipment operating on natural gas without requiring significant modifications thereof. Furthermore yield is considered an important factor.

E.g. from US 2014/0284198 A1 an installation for pyrolyzing divided solids such as waste plastics, rubbers or elastomers is known, which installation comprises a pre-treatment device for preparing the divided solids in order to enable pyrolysis in a subsequent pyrolysis reactor. This pyrolysis reactor is connected to the pre-treatment device in a leak-tight manner. The reactor is provided with a transfer member, that is made of a material associated with means for heating by the Joule effect. In the pre-treatment device the divided solids are subjected to liquefaction thereby bringing the solids into a liquid state, which are pyrolized to obtain pyrolytic oils and pyrolysis gas. It is said that the divided solids upon liquefaction are capable of producing in particular pyrolytic oils by recondensation of gas when the solids are pyrolyzed at 400-600 °C. Such oils can be recycled. A pyrolysis gas containing industrially useful components like methane, hydrogen, acetylene is obtained when pyrolyzing the solids at temperatures in the range of 600-900 °C. In an example of treating very high density polyethylene waste using a pyrolysis temperature in the core of the pyrolysis reactor of 600 °C a gas ratio of more than 75% with a methane content of more than 40% is achieved. These results are said to be spectacular in terms of the methane content in the pyrolysis gas. Pyrolysis is understood to be a heat treatment that takes place in the absence of oxygen, i.e. with an oxygen content remaining below about 5% according to US2012/0043194 A1, to which US 2014/0284198 A1 refers regarding pyrolysis and the pyrolysis reactor. It is also stated that the higher the (pyrolysis) temperature, the greater the proportion of gas.

US7188571 B2 discloses a method for the processing of carbon-containing polymeric material, wherein the carbon-containing polymeric material is introduced into the retort of a retort assembly. The retort is disposed at least partially within the combustion chamber and contains an inert heat-transfer medium and an agitation means. The combustion chamber is provided with heating means to indirectly heat the retort; The carbon-containing polymeric material is heated by the inert heat transfer medium to cause an at least partially decomposition. The processed carbon-containing polymeric material is disposed from the retort. The invention generally aims at improving the yield of methane from thermal decomposition of plastic material, thereby improving the quality and/or value of the raw gaseous fuel produced. An object of the invention is to provide a method of producing a gaseous fuel similar to Dutch natural gas regarding its composition and calorific value from secondary fuels in a high yield.

In a first aspect the invention provides a method of producing a gaseous fuel from secondary fuel, comprising the steps of
- providing a starting material, comprising a composition of free flowing particles of secondary fuel, wherein the secondary fuel is a product that classifies under EN 15359 wherein the particles have a particle size up to 20 mm, preferably ≤ 15 mm, such as about 10 mm or less, the composition has a density of more than 500 kg/m3 and a moisture content of less than 2% by weight and a nett calorific value of more than 35 MJ/kg,
- thermal decomposing the starting material by direct contact heating at a temperature in the range of 550-800 °C under atmospheric pressure conditions in an anaerobe atmosphere,
- collecting the produced gaseous fuel.

In this regard the term "secondary fuel" defines a product that classifies under EN 15359, advantageously in classes 1 regarding the properties of net calorific value (≥ 25 MJ/kg (as received)), chlorine (≤ 0.2 %) and mercury (median: ≤ 0.02 mg/MJ (as received); 80^{th} percentile: ≤0.04 mg/MJ (as received)) content and has not achieved the so called "end-of-waste" status according to Directive 2008/98/EC, Art. 6.

It has appeared that a composition comprising secondary fuel particles additionally having the specific size and density and dryness as defined above allows to produce a gaseous fuel in an economical way by thermal decomposition through direct contact heating, in particular gasification in the presence of an anaerobe atmosphere under prevailing atmospheric conditions regarding pressure at elevated temperature according to the method of the invention. In particular it has been possible to achieve a gas yield of over 80 vol.% with a methane content of more than 70 vol.% even more than 80 vol.%. The composition comprises a granular material which is composed of particles, preferably those which are considered as non-recyclable thermoplastics that are otherwise incinerated in a suitable incinerator in e.g. the cement industry, or discarded via landfills. Generally the composition according to the invention comprises any non-recyclable components comprising polyalkenes, polycarbonate, polyamide and polyester, of which the polyalkenes based on lower (C₁-C₄) alkenes, in particular polyethylenes and polypropylenes, are preferred.

The particle size may range up to 20 mm, preferably ≤ 15 mm. Advantageously the particles have a maximum size of about 10 mm in view of transport limitations in the process. The density thereof is at least 500 kg/m³ for reason of capacity restrictions in the reactor. Moisture content should be below 2%, because otherwise the reactor is used as vaporizer instead of supporting the reaction kinetics.

The secondary fuel particulates as defined above preferably fulfil the further conditions that the content of halogen containing compounds, in particular chloro and fluoro compounds, is minimal, in particular they are completely absent (wt% = 0). Preferably heavy metals are absent as well. Advantageously Hg and Cd, if any, are present in an amount of less than 1 mg Hg/kg respectively, less than 2 mg Cd/kg. The absence of these contaminations and/or impurities ensures the production of clean gaseous fuel, which can be further combusted in a conventional gas burner or furnace.

A preferred plastic starting material has a chemical composition

| | | |
|---|---|---|
| Water | wt.% | ≤ 2 |
| Ash content | wt. % | ≤ 20 |
| S | wt.% | ≤ 0.16 |
| Cl | wt.% | ≤ 0.1 |
| F | wt.% | ≤ 0.1 |

Heavy metals:

| | | |
|---|---|---|
| Cd | mg/kg | ≤ 4 |
| Tl | mg/kg | ≤ 4 |
| Hg | mg/kg | ≤ 0.6 |
| As | mg/kg | ≤ 5 |
| Co | mg/kg | ≤ 6 |
| Ni | mg/kg | ≤ 80 |
| Se | mg/kg | ≤ 10 |
| Sb | mg/kg | ≤ 100 |
| Pb | mg/kg | ≤ 190 |
| Cr | mg/kg | ≤ 125 |
| Cu | mg/kg | ≤ 350 |
| Mn | mg/kg | ≤ 250 |
| V | mg/kg | ≤ 10 |
| Sn | mg/kg | ≤ 30 |
| Zn | mg/kg | ≤ 1000 |
| Be | mg/kg | ≤ 2 |

the remainder being plastic, and has a maximum particle size of 20 mm, a density of 500-600 kg/m³, a lower heating value (LHV) of 35.41 MJ/kg, mean LHV of > 38.35 MJ/kg.

The starting material can be prepared from a primary feedstock of non-recyclable plastics, advantageously non-recyclable thermoplastics, using an agglomerator. Among others plastic film, fibre, filament and foam can be easily converted into a free flowing granular composition according to the invention. Composites are another suitable source of raw material for the composition according to the invention.

In the process according to the invention the granular composition as discussed above is subjected to thermal decomposition (direct gasification) at a temperature in the range of 550-800 °C and at atmospheric pressure in the presence of an anaerobe atmosphere. Contrary to known high pressure, high temperature processes like pyrolysis the direct gasification method according to the invention is carried out under prevailing atmospheric conditions. At temperatures below this temperature range conversion efficiency is small and the yield in terms of methane leaves something to be desired. At temperatures above the upper temperature limit significant improvements regarding composition and yield are not achieved. The method does not require the use of specially designed pressure vessels and the like as reactor(s). Anaerobe atmosphere in the context of this application means 3 vol.% 02 or less. Preferably the 02 content is at most 2.5 vol.%.

Typically the process according to the invention produces a gaseous fuel having a composition (vol.%)

| | |
|---|---|
| CO | 0-4.5 |
| CO2 | 2.0-11.0 |
| CH4 | 70-90 |
| CnHn | 2-16 |
| H2 | 0-5.0 |
| O2 | 0-0.5 |
| Others, mainly N2 | 0-0.1 |
| Chlorine | < 1 mg/kg |
| Flurorine | < 1 mg/kg |
| Density | 0.8-1.1 kg/m3 |
| Gross calorific value | 30.0-40.0 MJ/m3 |
| Nett calorific value | 32.0-42.0 MJ/m3 |

The process according to the invention is carried out by direct contact heating, preferably in a reactor as disclosed in WO 9939549 A1. Basically such a reactor comprises at least one transfer member having a longitudinal axis and a helical portion mounted to rotate about its own longitudinal axis inside a reactor housing, which extends from the inlet of the reactor to the outlet thereof. The transfer member is driven by a suitable motor. At least the helical portion of the transfer member is constituted in its bulk by an electrically conductive material and the transfer member has connection means for connecting it to an electricity power supply so that it itself constitutes the heater means.

It has appeared that use of this direct heating for gasification of the composition according to the invention enables to produce gaseous fuel having a methane content that is considerably higher than the pyrolysis gas produced according to US 2014/0284198 A1.

The gaseous fuel produced is suitable for further combustion in a combustor and the like, in which case the thus produced gaseous fuel is fed to a combined heat and power plant (CHP), wherein the gaseous fuel is converted into heat, electricity and carbon dioxide. On its turn this heat, electricity and carbon dioxide could be consumed in a greenhouse.

The invention is further illustrated by means of the single figure that shows an embodiment of the process according to the invention, as well as a greenhouse which is not object of the present invention.

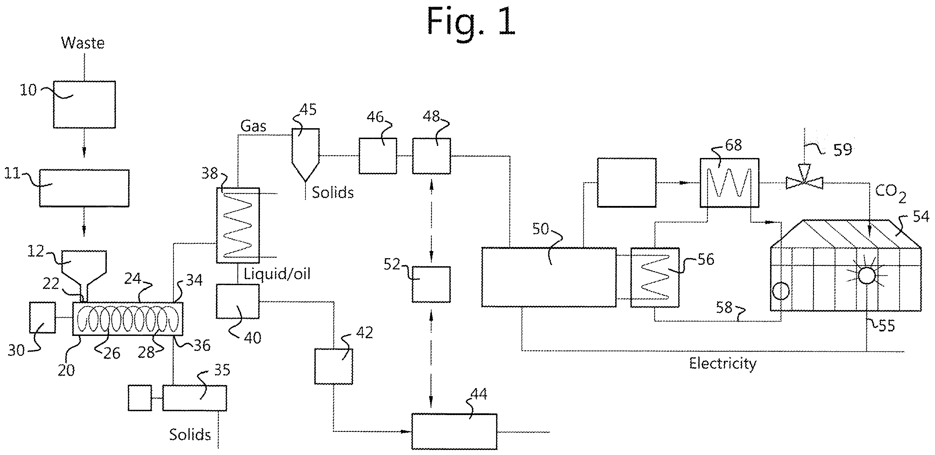

In Fig. 1 an agglomeration unit for producing a composition according to the invention is generally indicated by reference numeral 10. In this agglomerator waste secondary fuel material is sintered or plasticized by friction and pressed through a cylindrical die. The material exiting the die at the outer periphery thereof is cut by knives rotating around the die. The thus cut material is fed to a hot melt granulator, wherein co-operating knives further reduce the material size. Then the material is passed through a screen of which the size of the screen openings determine the granulate dimensions. Dust and the like can be easily separated off by means of further screening, e.g. using a cyclone, and recycled back. If necessary, the produced granular material can be cooled. Optionally after temporary storage in container 11, the free flowing particulate composition of secondary fuel is fed via hopper 12 as starting material to a reactor 20 at the inlet 22 thereof. The reactor 20 comprises a cylindrical housing 24. In the housing a screw conveyor 26 is arranged, of which the helical portion 28 is made from an electrically conductive material. At one end of the housing 24 a motor 30 is arranged for driving the screw conveyor 26. The housing 24 has a gas top outlet 34 at the end opposite to the end where the inlet 22 is arranged and a bottom outlet 36 for the residue of the treated particles. The residue is cooled in cooler 35. In this embodiment the gas top outlet 34 is connected to a condenser 38 for condensing the liquid (oil) fraction from the produced gas. This fraction can be collected at 40 and for example used after treatment in an oil/water separator 42 as diesel fuel in a diesel motor generator 44 that produces electricity that .e.g. can be used for the reactor 20 and/or any other equipment, e.g. at the plant. Typically this diesel thus produced comprises hydrocarbons (98-99.5 wt.%), the remainder being mainly water, and has a nett calorific value of about 39 MJ/kg (38.5-42.0 MJ/kg). Optionally the non-condensed gas fraction after solid separation in cyclone 45 is further purified, e.g. in active carbon filter 46 and/or CaCO₃ filter 48. The solids from cyclone 45 may be combined with the solids resulting from cooler 35. The gas thus produced can be used as a fuel in a combined heat and power engine 50 as shown. Temporarily storing in a suitable storage container 52 is another option. The combined heat and power engine 50 produces a CO2 gas containing exhaust gas, which can be used for conditioning the climate in greenhouse 54. Electricity generated by engine 50 can also be used in the greenhouse 54, e.g. for lighting 55 as illustrated. The heat produced in engine 50 can also be used, e.g. by heat exchange in heat exchanger 56 with a heat exchanging fluid that flows in a heating system 58 comprising a closed loop for this fluid, which loop passes at least partially through the greenhouse 54. CO₂ is also fed to the greenhouse 54 for conditioning the internal atmosphere thereof. Surplus exhaust gas can be discharged into the atmosphere via exhaust 59, preferably after cooling in heat exchanger 68 with the heat exchanging fluid flowing in heating system 58. If diesel motor generator 44 allows, and if necessary, the gas produced can also be fed to this device.

In an example secondary fuel starting material made of plastic was prepared in an agglomerator. The characteristic data thereof comprised particle size about 10 mm, an LHV (BG SBS 10/2013;L) of 36360 kJ/kg, a chlorine content (DIN 51727;L) < 0.1 wt.% and Hg content (DIN EN 1483;L) < 0.1 wt.%.

Detailed chemical analysis (inter alia according to DIN 51727;L and DIN EN ISO 17294-2;L) offered the following data.

| | |
|---|---|
| Ash content | 0.62 wt.% |
| Sulphur (total) | < 0.1 |
| Fluor (total) | < 0.1 |
| Chlorine (total) | < 0.1 |
| Sb | 104 mg/kg |
| As | < 1 |
| Pb | 1.1 |
| Cd | <0.1 |
| Cr (total) | 2.9 |
| Co | <1 |
| Cu | 1.9 |
| Mn | 39.1 |
| Hg | < 0.1 |
| Tl | <0.4 |
| Sn | <1 |

The agglomerate was subjected to thermal decomposition in the thermal decomposition reactor 20 as described referring to Fig. 1 in the presence of an anaerobe atmosphere under atmospheric conditions regarding pressure at various temperatures. The below Table 1 shows the results of the gas thus obtained in terms of composition regarding the main components and their yield.

**Table 1. Gas analysis data (in %)**

| | Temperature (°C) | | | | |
|---|---|---|---|---|---|
| Component (%) | 650 | 700 | 750 | 800 | |
| CO | 3.24 | 2.98 | 1.71 | 1.69 | |
| CO2 | 5.17 | 6.38 | 3.73 | 2.47 | |
| CH4 | 76.7 | 74.8 | 78.6 | 82.4 | |
| CnHn | 14.8 | 15.2 | 15.9 | 13.4 | |
| H2 | 0.00 | 0.00 | 0.00 | 0.00 | |
| O2 | 0.06 | 0.56 | 0.01 | 0.00 | |
| LHV (MJ/m3) | 37.5 | 37.03 | 38.7 | 38.4 | |

| | | | | | |
|---|---|---|---|---|---|
| LHV= Nett calorific value | | | | | |

As is apparent a CH4 yield of over 70% is achieved at all temperatures.

## Claims

1. Method of producing a gaseous fuel from secondary fuel, comprising the steps of
- providing a starting material, comprising a composition of free flowing particles of secondary fuel, wherein the secondary fuel is a product that classifies under EN 15359, wherein the particles have a particle size up to 20 mm, the composition has a density of more than 500 kg/m³ and a moisture content of less than 2% by weight and a net calorific value of more than 35 MJ/kg,
- thermal decomposing the starting material by direct contact heating at a temperature in the range of 550-800 °C under atmospheric pressure conditions in an anaerobe atmosphere
- collecting the produced gaseous fuel.

2. Method according to claim 1, wherein the secondary fuel is a product that classifies under EN 15359 in classes 1 regarding the properties of net calorific value (≥ 25 MJ/kg (as received)), chlorine (≤ 0.2 %) and mercury (median: ≤ 0.02 mg/MJ (as received); 80^{th} percentile: ≤0.04 mg/MJ (as received)) content and has not achieved the so called "end-of-waste" status according to Directive 2008/98/EC, Art. 6.

3. Method according to claim 1, wherein direct contact heating is carried out in a reactor (20) comprising a reactor housing (24) having a reactor inlet (22) and a reactor outlet (34; 36), wherein the starting material is advanced from the reactor inlet (22) to the reactor outlet (36) by at least one driven combined transfer and heating element (26) having a longitudinal axis and a helical portion (28) mounted to rotate about its own longitudinal axis inside the reactor housing (20), which element is constituted by electrically conductive material, connected to a power supply (30), wherein the starting material is heated by direct contact with at least the helical portion (28) of the transfer element(26).

4. Method according to any one of the preceding claims, wherein the starting material is a plastic starting material having a chemical composition:
| | | |
|---|---|---|
| Water | wt.% | ≤ 2 |
| Ash content | wt. % | ≤ 20 |
| S | wt.% | ≤ 0.16 |
| Cl | wt.% | ≤ 0.1 |
| F | wt.% | ≤ 0.1 |
Heavy metals:
| | | |
|---|---|---|
| Cd | mg/kg | ≤ 4 |
| Tl | mg/kg | ≤ 4 |
| Hg | mg/kg | ≤ 0.6 |
| As | mg/kg | ≤ 5 |
| Co | mg/kg | ≤ 6 |
| Ni | mg/kg | ≤ 80 |
| Se | mg/kg | ≤ 10 |
| Sb | mg/kg | ≤ 100 |
| Pb | mg/kg | ≤ 190 |
| Cr | mg/kg | ≤ 125 |
| Cu | mg/kg | ≤ 350 |
| Mn | mg/kg | ≤ 250 |
| V | mg/kg | ≤ 10 |
| Sn | mg/kg | ≤ 30 |
| Zn | mg/kg | ≤ 1000 |
| Be | mg/kg | ≤ 2 |
the remainder being plastic, and has a maximum particle size of 20 mm, a density of 500-600 kg/m³, a lower heating value (LHV) of 35.41 MJ/kg, mean LHV of > 38.35 MJ/kg.

5. Method according to any one of the preceding claims, wherein the produced gaseous fuel has a composition (vol.%)
| | |
|---|---|
| CO | 0-4.5 |
| CO2 | 2.0-11.0 |
| CH4 | 70-90 |
| CnHn | 2-16 |
| H2 | 0-5.0 |
| O2 | 0-0.5 |
| Others | 0-0.1 |
| | |
| Chlorine | < 1 mg/kg |
| Fluorine | < 1 mg/kg |
| | |
| Density | 0.8-1.1 kg/m³ |
| Gross calorific value | 30.0-40.0 MJ/m3 |
| Nett calorific value | 32.0-42.0 MJ/m3 |

6. Method according to any one of the preceding claims, wherein the produced gaseous fuel is fed to a combined heat and power plant (50), wherein the gaseous fuel is consumed to generate heat, electricity and exhaust gas comprising carbon dioxide.

7. Method according to claim 6, further comprising the step of providing the generated electricity, heat and carbon dioxide to a greenhouse (54) for growing plants, flowers, crops and the like.

## Patentansprüche

1. Verfahren zur Herstellung eines gasförmigen Brennstoffs aus Sekundärbrennstoff, das die Schritte umfasst des
- Bereitstellens eines Ausgangsmaterials, das eine Zusammensetzung aus frei fließenden Sekundärbrennstoffteilchen umfasst, wobei der Sekundärbrennstoff ein Produkt ist, das unter EN 15359 klassifiziert ist, wobei die Teilchen eine Teilchengröße von bis zu 20 mm aufweisen, wobei die Zusammensetzung eine Dichte von mehr als 500 kg/m³ und einen Feuchtigkeitsgehalt von weniger als 2 Gew.-% und einen Netto-Brennwert von mehr als 35 MJ/kg aufweist,
- thermischen Zersetzens des Ausgangsmaterials durch Direktkontakt-Erhitzung bei einer Temperatur in der Reichweite von 550-800 °C unter Atmosphärendruckbedingungen in einer anaeroben Atmosphäre
- Absammelns des hergestellten gasförmigen Brennstoffs.

2. Verfahren nach Anspruch 1, wobei der Sekundärbrennstoff ein Produkt ist, das unter EN 15359 in Klassen 1 klassifiziert ist, was die Eigenschaften Netto-Brennwert (≥ 25 MJ/kg (wie gewonnen)), Chlor- (≤ 0,2 %) und Quecksilber- (Mittelwert: ≤ 0,02 mg/MJ (wie gewonnen); 80. Perzentile: ≤ 0,04 mg/MJ (wie gewonnen)) Gehalt anbelangt, und nicht den sogenannten "Ende der Abfalleigenschaft"-Status nach Richtlinie 2008/98/EG, Art. 6 erreicht hat.

3. Verfahren nach Anspruch 1, wobei Direktkontakt-Erhitzung in einem Reaktor (20) ausgeführt wird, der ein Reaktorgehäuse (24) umfasst, das einen Reaktoreinlass (22) und einen Reaktorauslass (34; 36) aufweist, wobei das Ausgangsmaterial durch mindestens ein angetriebenes kombiniertes Transfer- und Heizelement (26) vom Reaktoreinlass (22) zum Reaktorauslass (36) vorgeschoben wird, das eine Längsachse und einen spiralförmigen Abschnitt (28) aufweist, der so montiert ist, dass er im Reaktorgehäuse (20) um seine eigene Längsachse dreht, welches Element aus elektrisch leitendem Material besteht, das mit einer Stromversorgung (30) verbunden ist, wobei das Ausgangsmaterial durch direkten Kontakt mit mindestens dem spiralförmigen Abschnitt (28) des Transferelements (26) erhitzt wird.

4. Verfahren nach einem der vorstehenden Ansprüche, wobei das Ausgangsmaterial ein Kunststoff-Ausgangsmaterial ist, das eine chemische Zusammensetzung aufweist von:
| | | |
|---|---|---|
| Wasser | Gew.-% | ≤ 2 |
| Aschegehalt | Gew.-% | ≤ 20 |
| S | Gew.-% | ≤ 0,16 |
| Cl | Gew.-% | ≤ 0,1 |
| F | Gew.-% | ≤ 0,1 |
Schwermetalle:
| | | |
|---|---|---|
| Cd | mg/kg | ≤ 4 |
| Tl | mg/kg | ≤ 4 |
| Hg | mg/kg | ≤ 0,6 |
| As | mg/kg | ≤ 5 |
| Co | mg/kg | ≤ 6 |
| Ni | mg/kg | ≤ 80 |
| Se | mg/kg | ≤ 10 |
| Sb | mg/kg | ≤ 100 |
| Pb | mg/kg | ≤ 190 |
| Cr | mg/kg | ≤ 125 |
| Cu | mg/kg | ≤ 350 |
| Mn | mg/kg | ≤ 250 |
| V | mg/kg | ≤ 10 |
| Sn | mg/kg | ≤ 30 |
| Zn | mg/kg | ≤ 1000 |
| Be | mg/kg | ≤ 2 |
wobei der Rest Kunststoff ist, und eine maximale Teilchengröße von 20 mm, eine Dichte von 500-600 kg/m³, einen unteren Heizwert (LHV) von 35,41 MJ/kg, mittleren LHV von > 38,35 MJ/kg aufweist.

5. Verfahren nach einem der vorstehenden Ansprüche, wobei der hergestellte gasförmige Brennstoff eine Zusammensetzung (Vol.-%) aufweist von
| | |
|---|---|
| CO | 0-4,5 |
| CO2 | 2,0-11,0 |
| CH4 | 70-90 |
| CnHn | 2-16 |
| H2 | 0-5,0 |
| O2 | 0-0,5 |
| Sonstige | 0-0,1 |
| Chlor | < 1 mg/kg |
| Fluor | < 1 mg/kg |
| Dichte | 0,8-1,1 kg/m³ |
| Brutto-Brennwert | 30,0-40,0 MJ/m3 |
| Netto-Brennwert | 32,0-42,0 MJ/m3 |

6. Verfahren nach einem der vorstehenden Ansprüche, wobei der hergestellte gasförmige Brennstoff in ein kombiniertes Heiz- und Kraftwerk (50) eingespeist wird, in dem der gasförmige Brennstoff verbraucht wird, um Wärme, Strom und Abgas zu erzeugen, das Kohlendioxid umfasst.

7. Verfahren nach Anspruch 6, weiter den Schritt des Bereitstellens des erzeugten Stroms, der Wärme und des Kohlendioxids an ein Treibhaus (54) umfassend, um Pflanzen, Blumen, Kulturpflanzen und dergleichen aufzuziehen.

## Revendications

1. Procédé de production d'un combustible gazeux à partir d'un combustible secondaire, comprenant les étapes consistant à :
- fournir un matériau de départ, comprenant une composition de particules de combustible secondaire à écoulement libre, dans lequel le fluide secondaire est un matériau respectant les termes de la norme EN 15359, dans lequel les particules ont une taille de particule allant jusqu'à 20 mm, la composition présentant une masse volumique de plus de 500 kg/m³, une teneur en humidité inférieure à 2% en poids et un pouvoir calorifique inférieur supérieur à 35 MJ/kg,
- décomposer thermiquement le matériau de départ par chauffage par contact direct à une température comprise dans la plage allant de 550 à 800°C à pression atmosphérique dans une atmosphère anaérobie, et
- collecter le combustible gazeux produit.

2. Le procédé selon la revendication 1, dans lequel le combustible secondaire est un matériau respectant les termes de la norme EN 15359 dans des classes 1 concernant les propriétés du pouvoir calorifique inférieur (≥ 25 MJ/kg (à la réception)), du chlore (≤ 0,2%) et du mercure (médiane ≤ 0,02 mg/MJ (à la réception); un contenu du 80^{ème} centile: ≤ 0,04 mg/MJ (à la réception)) et n'a pas atteint le statut dit de «fin du déchet» conformément à la directive 2008/98/EC, Art.6.

3. Le procédé selon la revendication 1, dans lequel le chauffage par contact direct est mis en œuvre dans un réacteur (20) comprenant une chambre (24) de réacteur ayant une entrée (22) de réacteur et une sortie (34; 36) de réacteur, dans lequel le matériau de départ est avancé de l'entrée du réacteur (22) à la sortie du réacteur (36) par au moins un élément (26) de transfert et de chauffage combiné entraîné ayant un axe longitudinal et une partie hélicoïdale (28) montée en rotation autour de son propre axe longitudinal à l'intérieur de la chambre du réacteur (20), lequel élément est constitué d'un matériau électriquement conducteur, connecté à une alimentation électrique (30), dans lequel le matériau de départ est chauffé par contact direct avec au moins la partie hélicoïdale (28) de l'élément (26) de transfert.

4. Le procédé selon l'une quelconque des revendications précédentes, dans lequel le matériau de départ est un matériau de départ en plastique ayant la composition chimique suivante:
| | |
|---|---|
| Eau : | ≤ 2% en poids |
| Teneur en cendres : | ≤ 20% en poids |
| S : | ≤ 0,16% en poids |
| Cl : | ≤ 0,1% en poids |
| F : | ≤ 0,1% en poids |
Métaux lourds:
| | |
|---|---|
| Cd : | ≤ 4 mg/kg |
| Tl : | ≤ 4 mg/kg |
| Hg : | ≤ 0,6 mg/kg |
| As : | ≤ 5 mg/kg |
| Co : | ≤ 6 mg/kg |
| Ni : | ≤ 80 mg/kg |
| Se : | ≤ 10 mg/kg |
| Sb : | ≤ 100 mg/kg |
| Pb : | ≤ 190 mg/kg |
| Cr : | ≤ 125 mg/kg |
| Cu : | ≤ 350 mg/kg |
| Mn : | ≤ 250 mg/kg |
| V : | ≤ 10 mg/kg |
| Sn : | ≤ 30 mg/kg |
| Zn : | ≤ 1000 mg/kg |
| Be : | ≤ 2 mg/kg |
le reste étant du plastique, et a une taille de particules maximale de 20 mm, une masse volumique de 500 à 600 kg/m³, un pouvoir calorifique inférieure (P.C.I.) de 35,41 MJ/kg, et un P.C.I. moyen supérieur à 38,35 MJ/kg.

5. Le procédé selon l'une quelconque des revendications précédentes, dans lequel le combustible gazeux produit a une composition (en % en volume) :
| | | |
|---|---|---|
| CO | 0 à 4,5 | |
| CO2 | 2,0 à 11,0 | |
| CH4 | 70 à 90 | |
| CnHn | 2 à 16 | |
| H2 | 0 à 5,0 | |
| O2 | 0 à 0,5 | |
| Autres | 0 à 0,1 | |
| Chlore | < 1 mg/kg | |
| Fluor | < 1 mg/kg | |
| | | |
| Masse volumique | | 0,8 à 1,1 kg/m³ |
| Pouvoir calorifique supérieur | | 30,0 à 40,0 MJ/m³ |
| Pouvoir calorifique inférieur | | 32,0 à 42,0 MJ/m³ |

6. Le procédé selon l'une quelconque des revendications précédentes, dans lequel le combustible gazeux produit est amené à une centrale (50) de production combinée de chaleur et d'électricité, dans lequel le combustible gazeux est consumé pour générer de la chaleur, de l'électricité et des gaz d'échappement comprenant du dioxyde de carbone.

7. Le procédé selon la revendication 6, comprenant en outre l'étape consistant à fournir l'électricité, la chaleur et le dioxyde de carbone générés à une serre (54) pour la culture de plantes, de fleurs, de cultures et similaires.
